# EUROPEAN PATENT APPLICATION

(11) **EP 4 480 631 A1**
(43) Date of publication of application: **25.12.2024**
(21) Application number: 24460022.7
(22) Date of filing: 13.06.2024
(51) Int. Cl.: B23Q 1/00

(54) **CLAMPING FIXTURE WITH A QUICK RELEASE AND POSITIONING MECHANISM FOR TOOLING AND WORKPIECES**

(30) Priority: 21.06.2023 PL 44529923
(71) Applicant: Bison Spolka Akcyjna, 15-569 Bialystok (PL)
(72) Inventor: Gres, Rafal, 15-166 Bialystok (PL)
(74) Representative: Dobkowska, Danuta Elzbieta

(57) **Abstract**

The subject of this invention is a clamping fixture with a quick release and positioning mechanism for tooling and workpieces.

A clamping fixture with a quick release and positioning mechanism for tooling and workpieces, comprising: a plate (1, 1.1) with pockets (12, 12.1) and fixing holes (9) which receive precision fixing pins (8); clamping blocks, a lead screw (2, 2.1); springs (7, 7.1), and characterised in that inside the plate's (1, 1.1) central part, and specifically inside a plate pocket (12, 12.1), there are two blocks mounted on a lead screw (2, 2.1), a clamping drive block (3, 3.1) and a clamping sliding block (4, 4.1), with these two blocks pressed together by the springs (7, 7.1) and separated by a fixed locating bridge (5), wherein the clamping drive block (3, 3.1) being mounted on the threaded section (26) of the lead screw (2, 2.1) and the clamping sliding block (4, 4.1) being mounted by means of a holder (6, 6.1) on the cylindrical section (29) of the lead screw (2, 2.1). The locating bridge (5) is formed by a rib or a separate component mounted in a groove (10) of the pocket (12) in the plate (1).

## Description

The subject of this invention is a clamping fixture with a quick release and positioning mechanism for tooling and workpieces.

The applications of powerful and accurate CNC machine tools requires a fast, precise and repeatable process for clamping the tooling and workpieces. The clamping mechanisms can be preferably used at different machining stations or on different machine tools. Position and orientation are key to manufacturing workpieces according to the specified dimensions and shape. A CNC machining station assumes that the tool is approaching the target coordinates, which have been entered into the computer control of the processing machine of the station. A machining position is determined by the position of the workpiece and the position of the tool. A mismatch between the actual position of the workpiece and the coordinate data entered results in a workpiece that does not conform to the specification documentation, or worse still, damage to the CNC machine tool by collision with the workpiece. In an automated machining process, the most difficult thing is to provide the operator with a high level of comfort and stability when changing a workpiece or clamping fixture. Each time, calibration and set-up requires many man-hours, which is not only inconvenient but also increases the actual cost of processing. Clamping fixtures with a quick-release and positioning mechanism for the tooling is used to reduce calibration and workpiece set-up time. When clamping for workpiece machining, it is necessary to account for considerable forces applied to the workpiece and to provide a clamping fixture for the workpiece which prevents displacement of the workpiece under the cutting forces applied. Fixtures require a robust structure. If the structure is not rigid enough, the transmission of forces between the individual components can overload the material of the fixture and result in permanent deformation of the fixture.

Patent application DE102014112843 discloses a zero point clamping system that can be used in particular in machine tools such as milling machines. Such system consists of a clamping fixture in the form of a vice with quick-change jaws which are made to conform to the workpiece being clamped. Special precision fixing pins are permanently fastened to said clamping fixture, which are used to secure the clamping fixture to the machine tool using a locking device which in turn is permanently attached to the machine tool. Such locking device is contained in a housing and forms a locking force transmission system using a wedge mechanism. The central piece of such locking device is a hold-down screw with a head which facilitates it rotation, wherein the screw is located in the housing. The second clamping block of such locking device is mounted on a left-hand thread at the end of the hold-down screw, wherein such end is opposite to the head. At the head end of the hold-down screw is the first hold-down block, mounted on the right-hand thread of same screw. The centreline of the hold-down screw is mapped to the system as an axis of symmetry. In addition, the locking device includes a first sliding wedge push rod, a second sliding wedge push rod, and four precision fixing pin sliding clamps. The first sliding wedge push rod and the two precision fixing pin sliding clamps are located on one side of the hold-down screw axis and each feature a guide pin. On the opposite side of the hold-down screw axis, there is a second sliding wedge push rod with a guide pin and two precision fixing pin sliding clamps which feature guide pins likewise. The guide pins are loosely inserted into guide channels. On both sides of each guide channel, a pre-tensioned return spring ensures that the sliding clamps of the precision fixing pins are extracted out of their locating holes. The locking force is applied in opposite directions by the main directions of hold-down pressure, each time from the hold-down screw to the hold-down blocks. This is followed by the transfer of force from the hold-down blocks via the wedge surfaces to the sliding wedge push rods and their extension from the locating hole. The precision fixing pin is pushed away from the locating hole wall under the pressure from the sliding clamps, causing the workpiece to be pressed against and secured with the precision fixing pins.

Precision workpiece fixture solutions are commercially available, including the Quick-Point base series from LANG Gunter of Germany. In the patent description of DE10155077, LANG Gunter disclosed a precision workpiece clamping fixture that enables fast and precise replacement of clamping jigs in a machine tool without the need for re-adjustment each time. The disclosed fixture features two plates, one being a fixing plate and the other being a clamping plate, for precise attachment of the tool holder, wherein the surfaces of the plates are in contact with each other. The fixing plate configured with clamping holes has dedicated fixing pins assigned to such holes and which are fixed in the clamping plate. The fixing pins use one section of the wall of the clamping holes as a reference surface when pressed against said wall. This is achieved by means of a clamping fixture located in the fixing plate, which not only clamps the fixing pins axially, but also presses them against the hole walls. The fixing pins are cylindrical in shape with a wedge-shaped clamping pocket. A clamping shoe is assigned to each fixing pin, which applies a clamping axial and radial force to the fixing pin. The clamping shoes are synchronously driven to flexibly deflect all fixing pins at the same time. Both a wedge mechanism and a hydraulic system can be used to drive such clamping shoes. The clamping shoes are slide-seated in the holes of the fixing plate, wherein the holes are located perpendicular to the clamping holes. Clamping shoes, for example, can have a circular cross-section and a wedge-shaped end. The other end of such clamping she can be tapered. Perpendicular to the clamping shoes are wedge shoes seated loosely in the fixing holes. The wedge shoes are spread apart by means of a conically-tipped screw retained in a threaded hole on the fixing plate. The rotation of the screw causes a reciprocating movement of the screw's conical tip against the cones of the wedge shoes and spreads them apart. The displacement of the wedge shoes extends of the clamping shoes and results in radial and axial tightening of the fixing pins. The clamping plate is thereby pressed against the fixing plate. Release of the fixing pins after loosening the conically-tipped screw is ensured by the sliding motion of the clamping shoes under the action of the springs which interconnect the opposing clamping shoes.

Utility model DE202018105390 discloses a device for clamping and positioning a workpiece or clamping fixture. The body of the clamping device consists primarily of a top plate and a bottom cover. The top plate has symmetrically arranged clamping holes which accept dedicated fixing pins which are attached within a workpiece or clamping fixture. There is also a plurality of through-holes on the side walls of the top plate and a recess in the bottom of the top plate to accept a set of sliding guide blocks the surfaces of which are pitched. A dedicated lead screw, with a left-hand thread on one of the screw's section and a right-hand thread on the other of the screw's section is loosely retained in the top plate. Guide blocks are mounted on such lead screw, with one guide block mating with the left-hand thread of the lead screw and the other guide block mating with the right-hand thread of the screw. These guide blocks are symmetrically arranged on the left and right, with their inward surfaces mating each other. The rotation of the lead screw causes both guide blocks to move. The pitched surfaces on the outward of the guide blocks are perpendicular to the axis of sliding channels intended to receive locking facilities. The sliding channels pass radially through clamping holes made on the top surface of the plate. The locking facilities retained in the sliding channels have their outward faces ending with a cone that fits appropriately into a wedge-shaped notch in the dedicated fixing pins attache within a workpiece or clamping fixture. Each locking facility has a spring pushing such facility towards the centre of the clamping device. The rotation of the lead screw causes the guide blocks to move apart and clamping facilities to extend outwards. Such clamping facilities exert radial and axial forces on the fixing pins when in contact with the latter, causing the workpiece or clamping fixture to be pressed against the clamping device plate. When the lead screw is loosened, the guide blocks are pushed inwards and the springs push the locking facilities inwards, causing the workpiece or clamping fixture to be released from the clamping device.

With these types of clamping devices, the extensive clamping and positioning mechanism affects the overall dimensions and weight of such clamping devices. A wedge mechanism featured therein is also prone to wear caused by frictional force.

The aim of this invention is to improve a clamping fixture with a quick release and positioning mechanism for tooling or workpieces in order to facilitate clamping workpieces with constant reliability as well as with reproducible accuracy, and to achieve a simplified compact design using standardised hardware.

The essence of the invention is a clamping fixture with a quick release and positioning mechanism for tooling and workpieces, comprising: a plate with pockets and fixing holes which receive precision fixing pins; clamping blocks, a lead screw; springs; and characterised in that inside the plate's central part, and specifically inside a plate pocket, there are two blocks, a clamping drive block and a clamping sliding block, with these two blocks pressed together by the springs and separated by a fixed locating bridge, wherein the clamping drive block being mounted on the threaded section of the lead screw and the clamping sliding block being mounted by means of a holder on the cylindrical section of the lead screw.

Preferably, a locating bridge is formed in the plate between two of its pockets.

In another preferable embodiment, the locating bridge is a separate part mounted in the groove of a plate's pocket and attached to the plate using screws, wherein the locating bridge being in the form of a block with a U-shaped pocket formed in its central part.

In an additional preferable embodiment, the clamping drive block and the clamping sliding block each have a wedge-shaped section at both their ends on one of the outward side surfaces, and bevels with an angle between 15° and 45°.

Preferably, the plate's pocket is closed with a cover and a holder is provided and formed by two mounting pins which engage the groove of the lead screw.

In another preferable embodiment, a holder incorporates a locking fork that engages with the groove of the lead screw.

One preferable feature is that the springs are compressed springs mounted on a lead screw, between the clamping drive block and the clamping sliding block, with the walls of the pocket parallel to and furthest from the locating bridge.

In another preferable embodiment, the springs are tension springs interconnecting the clamping drive block and the clamping sliding block through holes in these blocks.

A clamping fixture with a quick release and positioning mechanism for tooling or workpieces according to the invention has a simplified structure.

Direct spreading of the clamping drive and sliding blocks apart without any intermediate components provides simplification of the clamping fixture's mechanism, reduction of its manufacturing costs and increased service life of the clamping fixture's mechanism due to fewer moving parts. The use of trapezoidal-shaped clamping blocks results in force components oriented towards the axis of the lead screw, which ensures that the clearance is eliminated between the side walls of the clamping blocks and the side walls of the pocket in the plate in which the blocks are placed. The location of the locating bridge attached to the plate between the spring-loaded clamping blocks ensures that the entire clamping fixture's mechanism is centred when the precision fixing pins are released from the clamp. Locating the mechanism in the centre of the plate avoids making process holes on the side walls, which increases the space for the arrangement of the connection and fixing holes according to the customer's needs, in contrast to Quick-Point bases, wherein the amount of such free space is limited.
The solution of this invention features by a significantly simplified wedge mechanism and fewer wedging elements, while ensuring that the precision and clamping force of the workpiece is maintained.

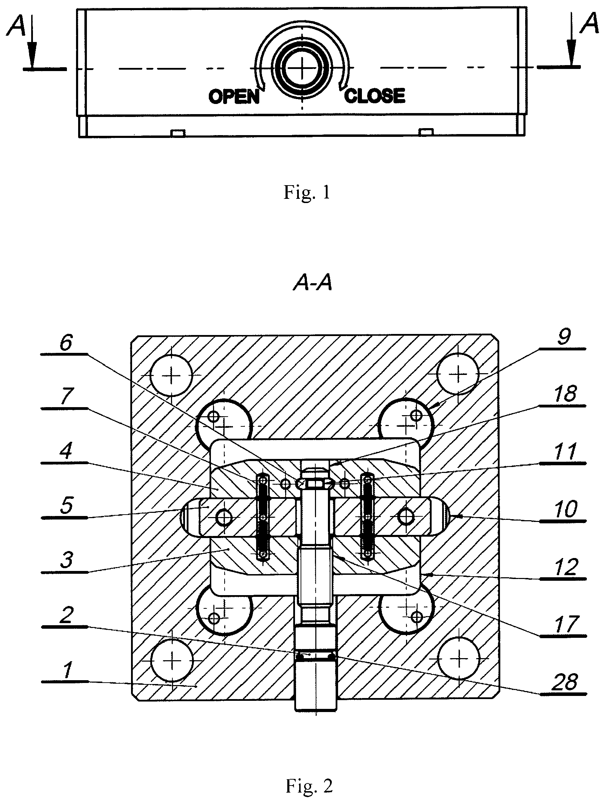

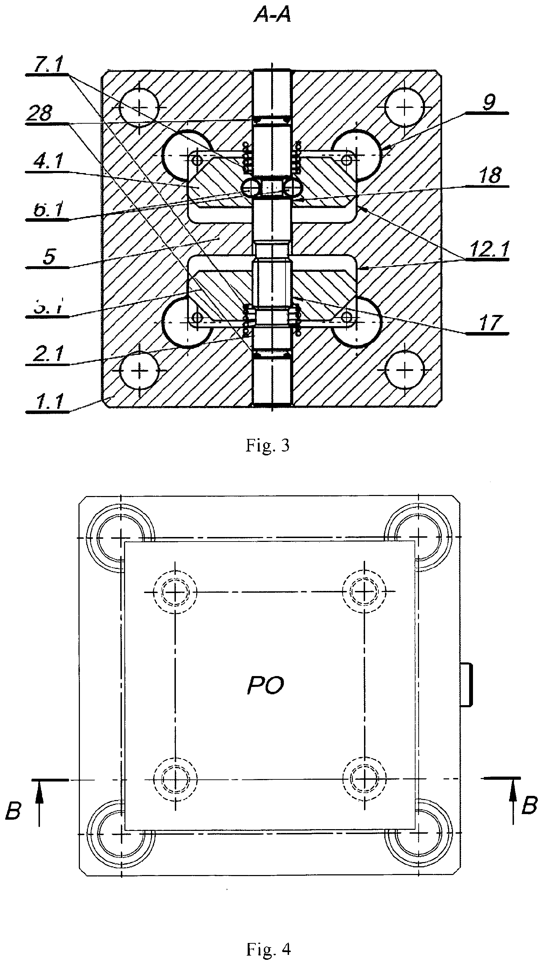

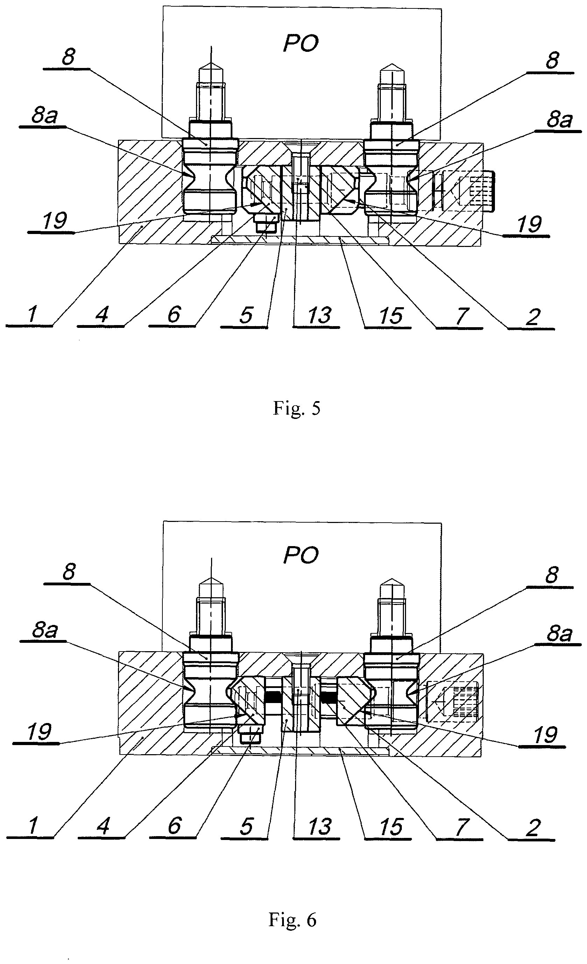

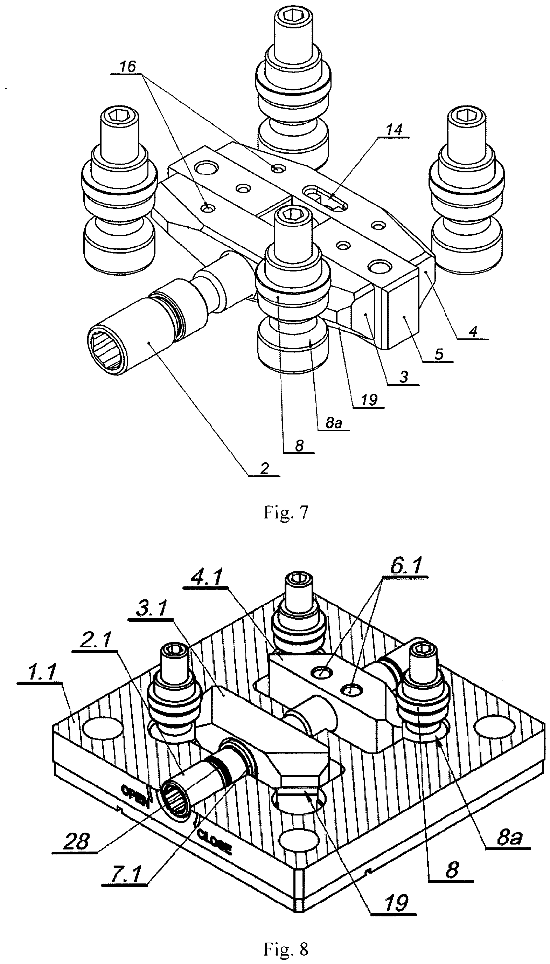

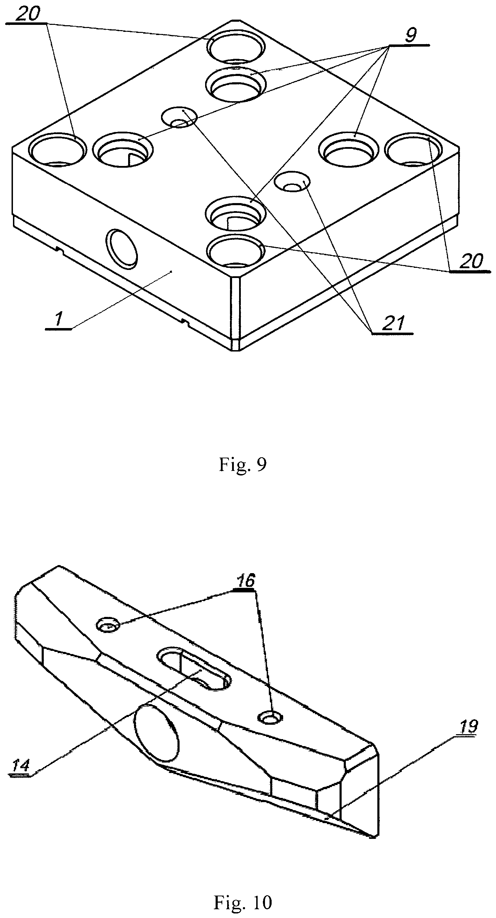

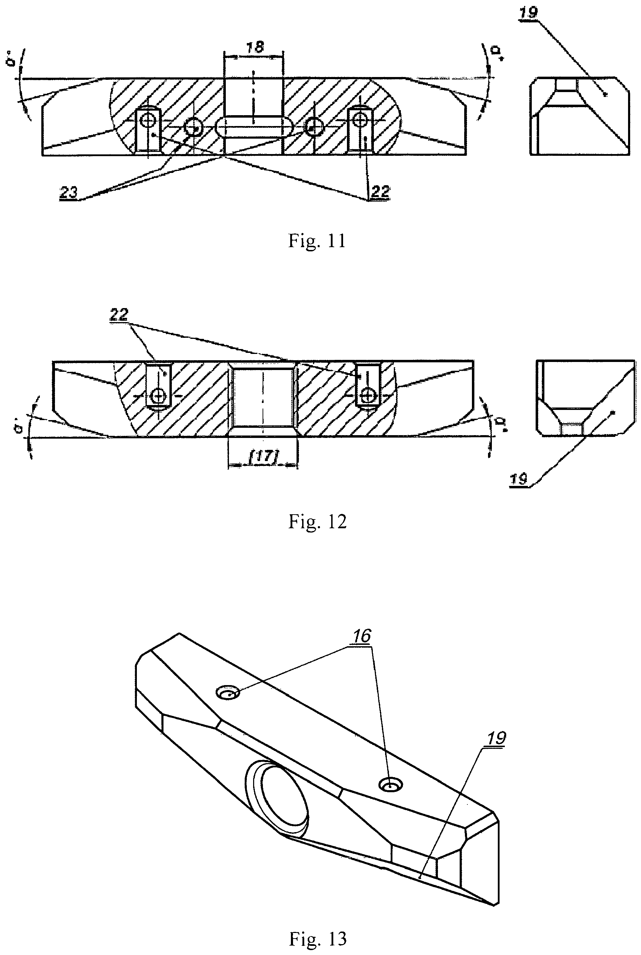

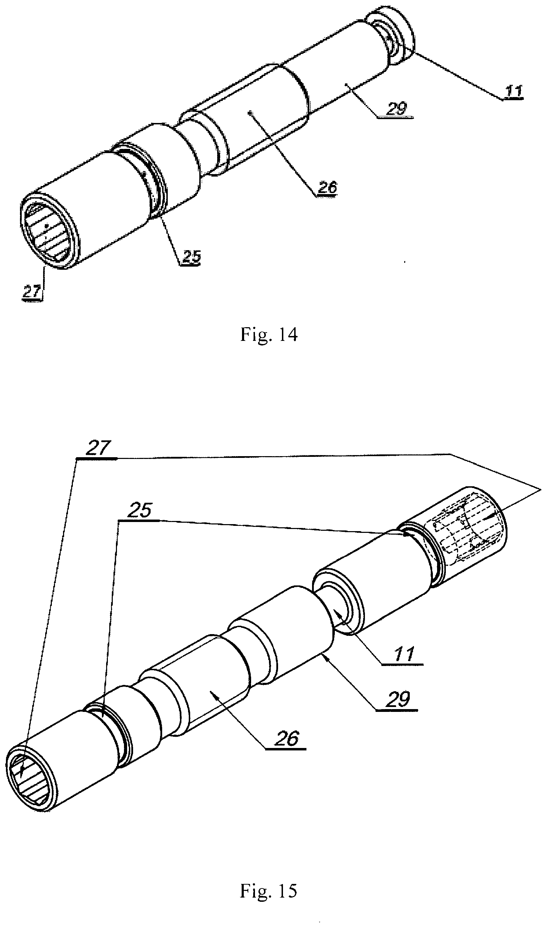

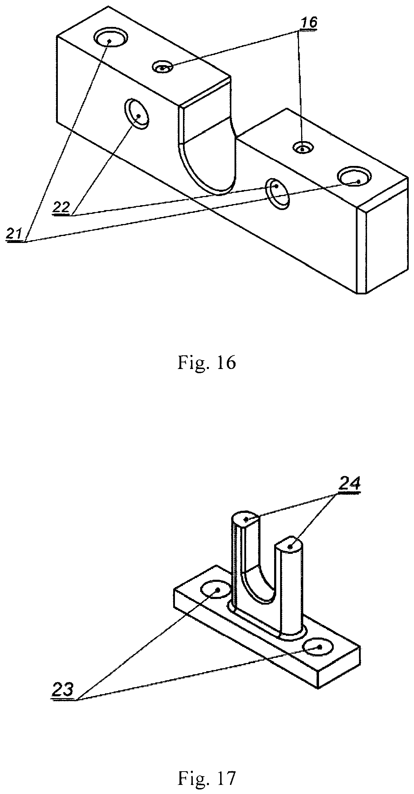

The subject of the invention in the embodiments in the drawing, wherein: fig. 1 illustrates a front view of the clamping fixture with a quick release and positioning mechanism; fig. 2 is section A-A of the view in fig. 1 of a clamping fixture with a quick-release fastening and positioning mechanism as an embodiment that features a fixed locating bridge being a separate component; fig. 3 is section A-A of the view in fig. 1 of a clamping fixture with a quick release and positioning mechanism as an embodiment with a fixed locating bridge being a rib formed by pockets in the plate; fig. 4 illustrates a top view of the clamping fixture with a quick release and positioning mechanism; fig. 5 is section B-B of the view in fig. 4 of a clamping fixture witha quick release and positioning mechanism shown in a released (non-clamping) state; fig. 6 is section B-B of the view in fig. 4 of a clamping fixture with a quick release and positioning mechanism in a secured (clamping) state; fig. 7 illustrates a perspective view of a clamping fixture with a quick-release fastening and positioning mechanism in an embodiment that features a fixed locating bridge being a separate component; fig. 8 illustrates a perspective view of the plate cross-section to depict a clamping fixture with a quick-release fastening and positioning mechanism as an embodiment that features a fixed locating bridge being a rib formed by pockets in the plate; fig. 9 illustrates a perspective view of the clamping fixture with a quick release and positioning mechanism, disclosing the location of the connection and fixing holes; fig. 10 illustrates a perspective view of a clamping sliding block; fig. 11 illustrates top and side views of a clamping sliding block; fig. 12 illustrates top and side views of a clamping drive block; fig. 13 illustrates a perspective view of a clamping drive block; fig. 14 illustrates a perspective view of a lead screw in an embodiment that features a fixed locating bridge being a separate component; fig. 15 illustrates a perspective view of a lead screw in an embodiment with a fixed locating bridge being a rib formed by pockets in the plate; fig. 16 illustrates a perspective view of a fixed locating bridge being a separate component; and fig. 17 illustrates a perspective view of a holder.

### Example I

A clamping fixture with a quick release and positioning mechanism, comprising a plate 1 with a pocket 12 formed in its central part, in which a lead screw 2, springs 7, a clamping drive block 3, a clamping sliding block 4, and a locating bridge 5 are arranged. The pocket 12 in the plate 1 is closed by a cover 15.

The clamping sliding block 4 features a through hole 18, in which a lead screw 2 is mounted using a holder 6 and free to rotate. The holder 6 is seated in a groove 11 of the lead screw 2 and a groove 14 of the clamping sliding block 4. The holder 6 comprising a locking fork 24 is additionally bolted to the clamping sliding block 4 using fixing holes 23.

The clamping drive block 3 and the clamping sliding block 4 are interconnected by tension springs 7 located in holes 22 and are secured by fasteners mounted in holes 16.

Between the clamping drive block 3 and the clamping sliding block 4 there is a locating bridge 5 in the form of a block with a U-pocket in its central part. The locating bridge 5 is mounted in a groove 10 made in the pocket 12 of the plate 1. The locating bridge 5 is additionally bolted to the plate 1 via the connection holes 21 with a countersunk head bolt 13.

Precision fixing pins 8 threaded into a workpiece PO being clamped are inserted into fixing holes 9 made in the plate 1. The clamping drive block 3 and the clamping sliding block 4 have a wedge section 19 on the outward walls and bevels at an angle a of 15° to 45°. The plate 1 is permanently bolted to the machine tool via connection holes 20. The rotation of the lead screw 2 causes the clamping drive block 3 and the clamping sliding block 4 to move away from the locating bridge 5 until the wedge section 19 of both clamping blocks touch tapered pockets 8a of the precision fixing pins 8. Under the radial force exerted by the clamping drive block 3 and clamping sliding block 4 being spread apart, the precision fixing pins 8 are pressed against the walls of their respective fixing holes 9. The wedge section 19 applies an axial force to the tapered pockets 8a in the precision fixing pins 8, causing the bottom plane of the workpiece PO being fixed to be pressed against the top plane of the plate 1. When releasing the lead screw 2, the clamping drive block 3 and the clamping sliding block 4 come toward one another until they touch the locating bridge 5 by means of the tension springs 7 interconnecting both clamping blocks 3 and 4. The clamping drive block 3 and the clamping sliding block 4 have bevelled walls, so that force components emerge and are oriented towards the axis of the lead screw 2, which ensures that the clearance is eliminated between the block walls and the side walls of the pocket 12 in the plate 1, in which both blocks are placed. The lead screw 2 features a wrench socket 27 and a groove 25 in which a seal 28 is located that retains the grease inside the clamping fixture. The seal 28 closes the space in the loose fit between the lead screw 2 and the plate 1 providing a swing of the mechanism that is essential to simultaneous fastening of the four precision fixing pins 8. This avoids premature setting of the mechanism and the uneven force of the clamping drive block 3 and the clamping sliding block 4 on the precision fixing pins 8.

### Example II

A clamping fixture with a quick release and positioning mechanism, comprising a plate 1.1 with two pockets 12.1 made in its central part. In each pocket 12.1 there is a clamping block; in one of the pockets, it is a clamping drive block 3.1 and in the other pocket, it is a clamping sliding block 4.1. The pockets 12.1 are separated from each other by a locating bridge 5 formed within the plate 1.

The clamping sliding block 4.1 features a through hole 18, in which a lead screw 2.1 is mounted using a holder 6.1 and free to rotate. The holder 6.1 is seated in a groove 11 of the lead screw 2.2 and a groove 14 of the clamping sliding block 4.1. A holder 6.1 is formed by locating pins. The clamping drive block 3.1 having a threaded hole 17, is mounted on the threaded section 26 of a lead screw 2.1.

Springs 7.1 mounted on the lead screw 2.1 are springs compressed between the clamping drive block 3.1, the clamping sliding block 4.1, and the walls of the pocket 12.1 parallel to and furthest from the locating bridge 5.

Precision fixing pins 8 threaded into a workpiece PO being clamped are inserted into fixing holes 9 made in the plate 1.1. The pocket 12.1 in the plate 1.1 is closed by a cover 15. The clamping drive block 3.1 and the clamping sliding block 4.1 have a wedge section 19 on the outward walls and bevels at an angle a of 15° to 45°.

The plate 1.1 is permanently bolted to the machine tool via connection holes 20. The rotation of the lead screw 2.1 causes the clamping drive block 3.1 and the clamping sliding block 4.1 to move away from the locating bridge 5 until the wedge section 19 of both clamping blocks touch tapered pockets 8a of the precision fixing pins 8. Under the radial force exerted by the clamping drive block 3.1 and clamping sliding block 4.1 being spread apart, the precision fixing pins 8 are pressed against the walls of their respective fixing holes 9. The wedge section 19 applies an axial force to the tapered pockets 8a in the precision fixing pins 8, causing the bottom plane of the workpiece PO being fixed to be pressed against the top plane of the plate 1.1. When releasing the lead screw 2.1, the clamping drive block 3.1 and the clamping sliding block 4.1 come toward one another until they touch the locating bridge 5 by means of the springs 7.1 interconnecting both clamping blocks. The clamping drive block 3.1 and the clamping sliding block 4.1 have bevelled walls, so that force components emerge and are oriented towards the axis of the lead screw 2.1, which ensures that the clearance is eliminated between the block walls and the side walls of the pocket 12.1 in the plate 1.1, in which both blocks are placed. The lead screw 2.1 features a wrench socket 27 and a groove 25 in which a seal 28 is located that retains the grease inside the clamping fixture. The seal 28 closes the space in the loose fit between the lead screw 2.1 and the plate 1.1 providing a swing of the mechanism that is essential to simultaneous fastening of the four precision fixing pins 8. This avoids premature setting of the mechanism and the uneven force of the clamping drive block 3.1 and the clamping sliding block 4.1 on the precision fixing pins 8.

A quick release and positioning mechanism comprised by clamping fixtures can be used in different arts which involve machining of steel and other materials on CNC machine tools. A quick release and positioning mechanism applied in a clamping fixture facilitates quick and precise retooling of machine tools. This translates into time savings and directly reduces manufacturing costs. Operation of such mechanism is intuitive and unproblematic, so that no skilled personnel is required to retool the machine. The simplified structure and use of standardised hardware reduce the cost of manufacturing the clamping tool compared to competitive solutions. This is associated with a lower final price of the product which increases availability and helps to reach a wider range of customers.

### Legend:

PO - workpiece
α - angle from 15° to 45°
1 - plate with a locating bridge formed by a block with a U-shaped pocket
1.1 - plate with two pockets
2 - lead screw mounted in the plate 1
2.1 - lead screw mounted in the plate 1.1
3 - clamping drive block mounted in the pocket 12 of the plate 1
3.1 - clamping drive block mounted in the pocket 12.1 of the plate 1.1
4 - clamping sliding block mounted in the pocket 12 of the plate 1
4.1 - clamping sliding block mounted in the pocket 12.1 of the plate 1.1
5 - locating bridge
6 - holder with a locking fork
6.1 - holder formed by two pins
7 - tension spring
7.1 - compression spring
8 - precision fixing pins
8a - tapered pocket in the precision fixing pin
9 - fixing holes for precision fixing pins
10 - groove in the plate 1
11 - groove in the lead screw
12 - pocket in the plate 1
12.1 - pockets in the plate 1.1
13 - locating bridge centring bolt
14 - groove in the clamping sliding block
15 - cover
16 - holes in the clamping blocks
17 - threaded hole in the clamping drive block
18 - through-hole in the clamping sliding block
19 - pitch of the clamping blocks
20 - connection holes
21 - connection holes of the locating bridge
22 - holes for springs
23 - holder mounting hole
24 - lead screw locking fork
25 - seal groove
26 - threaded section of the lead screw
27 - wrench socket
28 - seal
29 - cylindrical section of the lead screw

## Claims

1. A clamping fixture with a quick release and positioning mechanism for tooling and workpieces, comprising: a plate (1, 1.1) with pockets (12, 12.1) and fixing holes (9) which receive precision fixing pins (8); clamping blocks, a lead screw (2, 2.1); springs (7, 7.1), and **characterised in that** inside the plate's (1, 1.1) central part, and specifically inside a plate pocket (12, 12.1), there are two blocks mounted on a lead screw (2, 2.1), a driving clamping block (3, 3.1) and a sliding clamping block (4, 4.1), with these two blocks pressed together by the springs (7, 7.1) and separated by a fixed locating bridge (5), wherein the clamping drive block (3, 3.1) being mounted on the threaded section (26) of the lead screw (2, 2.1) and the clamping sliding block (4, 4.1) being mounted by means of a holder (6, 6.1) on the cylindrical section (29) of the lead screw (2, 2.1).

2. A clamping device according to claim 1, **characterised in that** a locating bridge (5) is formed in a plate (1.1) between two of its pockets (12.1).

3. A clamping device according to claim 1, **characterised in that** a locating bridge (5) is formed by a block with a U-shaped pocket in its central part and with the locating bridge (5) mounted in a groove (10) of a pocket (12) of a plate (1).

4. A clamping device according to claim 3, **characterised in that** a locating bridge (5) is attached to a plate (1) using bolts (13).

5. A clamping device according to claim 1, **characterised in that** a clamping drive block (3, 3.1) and a clamping sliding block (4,4.1) each have a wedge-shaped section (19) at both their ends on one of the outward side surfaces, and bevels with an angle between 15° and 45°.

6. A clamping device according to claim 1, **characterised in that** a pocket (12, 12.1) of a plate (1, 1.1) is closed by a cover (15).

7. A clamping device according to claim 1, **characterised in that** a holder (6.1) is formed by two fixing pins which mate with a groove (11) of a lead screw (2).

8. A clamping device according to claim 1, **characterised in that** a holder (6) comprises a locking fork (24) which mates with a groove (11) of a lead screw (2).

9. A clamping device according to claim 1, **characterised in that** springs (7.1) mounted on a lead screw (2.1) are springs compressed between a clamping drive block (3.1), a clamping sliding block (4.1), and walls of a pocket (12.1) parallel to and furthest from a locating bridge (5).

10. A clamping device according to claim 1, **characterised in that** springs (7) are tension springs interconnecting a clamping drive block (3) and a clamping sliding block (4) through holes (22).
